# EUROPÄISCHE PATENTSCHRIFT

(11) **EP 1 750 495 B1**
(45) Veröffentlichungstag und Bekanntmachung des Hinweises auf die Patenterteilung: **10.07.2013**
(21) Anmeldenummer: 05740571.4
(22) Anmeldetag: 29.04.2005
(51) Int. Cl.: A01B 63/22, A01B 29/06

(54) **FAHRWERK FÜR LANDWIRTSCHAFTLICHE BODENBEARBEITUNGSMASCHINE**
CHASSIS FOR AN AGRICULTURAL SOIL CULTIVATION MACHINE
DISPOSITIF DE ROULEMENT POUR MACHINE AGRICOLE SERVANT À LA PRÉPARATION DU SOL

(30) Priorität: 29.05.2004 DE 102004026425
(43) Veröffentlichungstag der Anmeldung: 14.02.2007
(73) Patentinhaber: Amazonen-Werke H. Dreyer GmbH & Co. KG, 49205 Hasbergen-Gaste (DE)
(72) Erfinder: POKRIEFKE, Michael, 27798 Hude (DE); SOSNICKI, Jürgen, 04205 Leipzig (DE)
(86) Internationale Anmeldenummer: PCT/EP2005/004656
(87) Internationale Veröffentlichungsnummer: WO 2005/115124

(56) Entgegenhaltungen:
- EP-A- 1 529 427
- DE-A1- 10 141 991
- DE-A1- 19 951 900
- DE-U1- 20 313 105

## Beschreibung

Die Erfindung betrifft ein Fahrwerk für eine landwirtschaftliche Bodenbearbeitungsmaschine gemäß des Oberbegriffes des Patentanspruches 1.

Ein derartiges Fahrwerk ist beispielsweise in der

DE 203 13 105 U1 beschrieben.

Bei diesem Fahrwerk sind die seitlichen Fahrwerksreifensätze mittels Schwenkarmen über Gelenke am Tragrahmen gelenkig aufgehängt und können über zwischen den Schwenkarmen und dem Tragrahmen angeordneten Hydraulikzylinder in eine Arbeitsstellung angehoben und in eine Transportstellung abgesenkt werden, so dass durch das Anheben der seitlichen Fahrwerksreifensätze gegenüber den Tragrahmen die an dem Rahmen angeordneten Bearbeitungswerkzeuge in Arbeitsstellung abgesenkt und durch das Absenken der seitlichen Fahrwerksreifensätze wird der Tragrahmen angehoben und die Arbeitswerkzeuge aus dem Boden gehoben. Die Schwenkarme der seitlichen Fahrwerksreifensätze sind über einen quer verlaufenden Tragbalken miteinander verbunden. An diesem Tragbalken sind mittels weiterer Schwenkarme die mittleren Reifensätze mittels Gelenke angeordnet. Zwischen dem Tragbalken und den weiteren Schwenkarmen ist eine Verriegelungseinrichtung angeordnet, mittels welcher die Schwenkarme starr mit dem Tragbalken verbindbar sind. Wenn die Schwenkarme der seitlichen Fahrwerksreifensätze abgesenkt werden, wird die Verriegelungseinrichtung gelöst, so dass die Verriegelung der weiteren Schwenkarme mit dem Tragbalken gelöst wird. Die mittleren Reifensätze können dann gegenüber den seitlichen Fahrwerksreifensätzen nach oben ausweichen, so dass sie sich in einer höhenbeweglichen Fahrstellung befinden. Die Maschine wird dann nur noch auf den seitlichen Fahrwerksreifensätzen während des Transportes getragen. Die Verriegelung der mittleren Reifensätze ist relativ aufwendig. Weiterhin ist nachteilig, dass die mittleren Reifensätze während des Transportes auf dem Boden laufen. Dies führt zu einem erhöhten Verschleiß der Reifen. Des weiteren können die mittleren Reifen den Fahrweg, insbesondere bei Kurvenfahrt beschädigen.

Der Erfindung liegt die Aufgabe zugrunde, das erfindungsgemäße Fahrwerk hinsichtlich der Verstellung zwischen Walzstellung und Fahrstellung zu verbessern. Die Aufgabe wird erfindungsgemäß durch die Merkmale des Patentanspruches 1 gelöst. Infolge dieser Maßnahmen werden die mittleren Reifensätze bzw. der mittlere Reifensatz während des Transportes gegenüber den seitlichen Fahrwerksreifensätzen angehoben.

Eine einfache Ausgestaltung der Verstelleinrichtung zum Verschwenken des mittleren Reifensatzes bzw. der mittleren Reifensätze wird dadurch erreicht, dass die motorische Verstelleinrichtung als zumindest ein doppeltwirkender Hydraulikzylinder ausgebildet ist.

Eine einfache verschwenkbare Anordnung der mittleren Reifensätze gegenüber den seitlichen Fahrwerksreifensätzen wird dadurch erreicht, dass die Reifensätze an einem Hauptrahmen drehbar angeordnet sind, dass der (die) mittleren Reifensa(e)tz(en) an einem Zwischenrahmen angeordnet sind, dass der Zwischenrahmen mittels Schwenkarmen an dem Hauptrahmen mit Schwenkgelenken angeordnet ist, und dass die motorische Verstelleinrichtung zwischen dem Zwischenrahmen und dem Hauptrahmen angeordnet ist.

Um Maschinen mit einer Arbeitsbreite von größer als 3m auf öffentlichen Straßen und Wegen transportieren zu können, ist vorgesehen, dass jeweils seitlich außen neben den Fahrwerksreifensätzen mehrere in Reihe angeordnete Seitenreifensätze angeordnet sind, dass die Seitenreifensätze an Seitenrahmen drehbar angeordnet sind, dass die Seitenrahmen an dem Hauptrahmen mittels Schwenkgelenken angeordnet sind, dass zwischen dem Hauptrahmen und den Seitenrahmen motorische Verstellelemente angeordnet sind. Infolge dieser Maßnahmen können die neben den seitlichen Fahrwerksreifensätzen angeordneten Maschinenteile in einfacher Weise nach oben - innen eingeschwenkt werden, so dass eine schmale Transportbreite erreicht wird.

Um in einfacher Weise die entsprechenden Hydraulikzylinder zum Einklappen der Seitenrahmen und für das Anheben der mittleren Fahrwerksreifensätze betätigen zu können, ist vorgesehen, dass die den mittleren Reifensätzen zugeordneten Hydraulikzylinder in Parallelschaltung zu den Hydraulikzylindern, die den Seitenrahmen zum Einklappen zugeordnet sind, angeordnet sind.

Weitere Einzelheiten der Erfindung sind den übrigen Unteransprüchen, der Beispielsbeschreibung und den Zeichnungen zu entnehmen. Hierbei zeigen
Fig. 1 die Bodenbearbeitungsmaschine in Arbeitsstellung in perspektivischer Darstellungsweise,
Fig. 2 die Bodenbearbeitungsmaschine in Transportstellung, in perspektivischer Darstellungsweise in der Ansicht von schräg hinten oben,
Fig. 3 die Bodenbearbeitungsmaschine in Transportstellung in der Seitenansicht,
Fig. 4 die Bodenbearbeitungsmaschine in Transportstellung in der Ansicht von hinten
und
Fig. 5 der Hydraulikschaltplan für die Zylinder zum Einklappen und Ausklappen der Seitenteile und des Hydraulikzylinders zum Anheben der mittleren Reifensätze der mittleren Walzen.

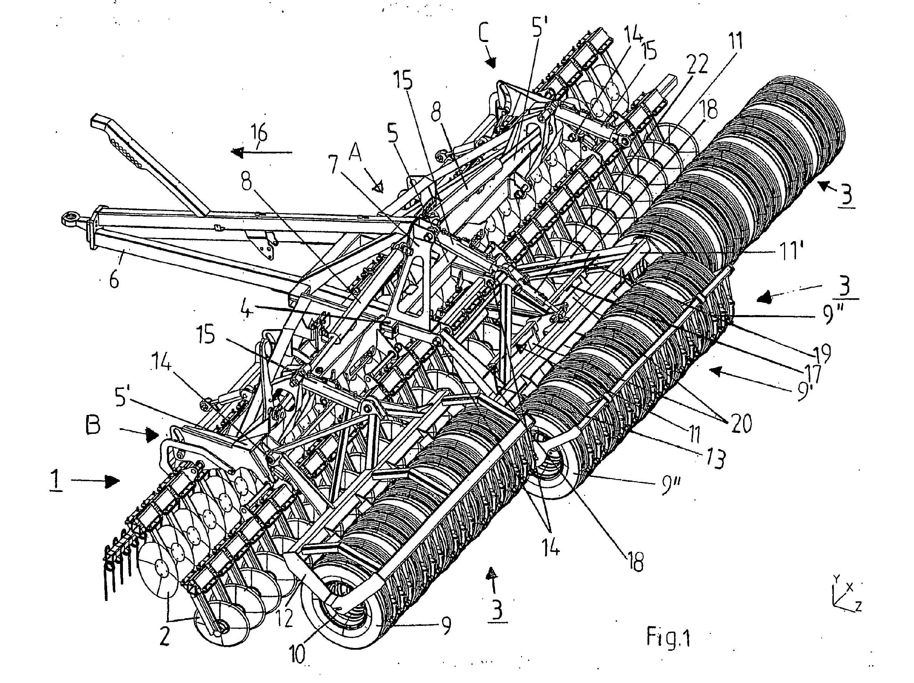

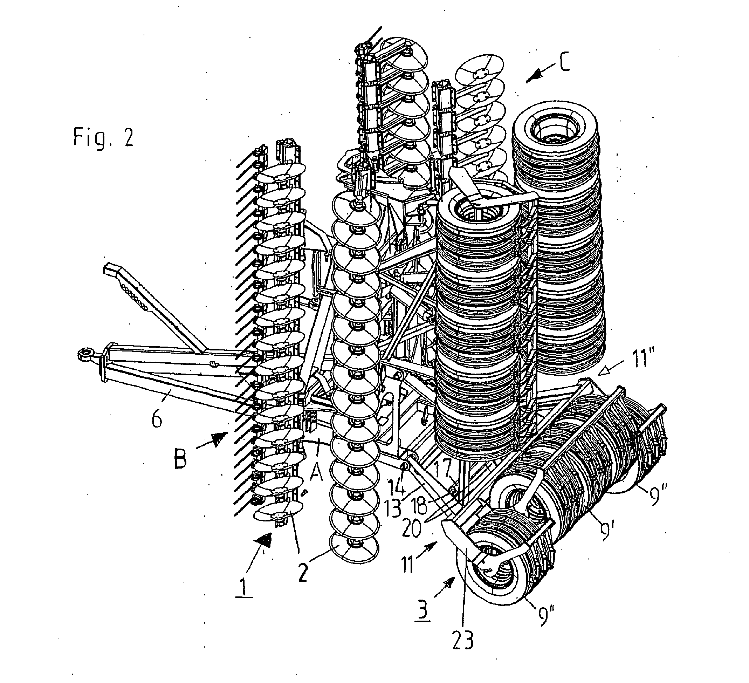

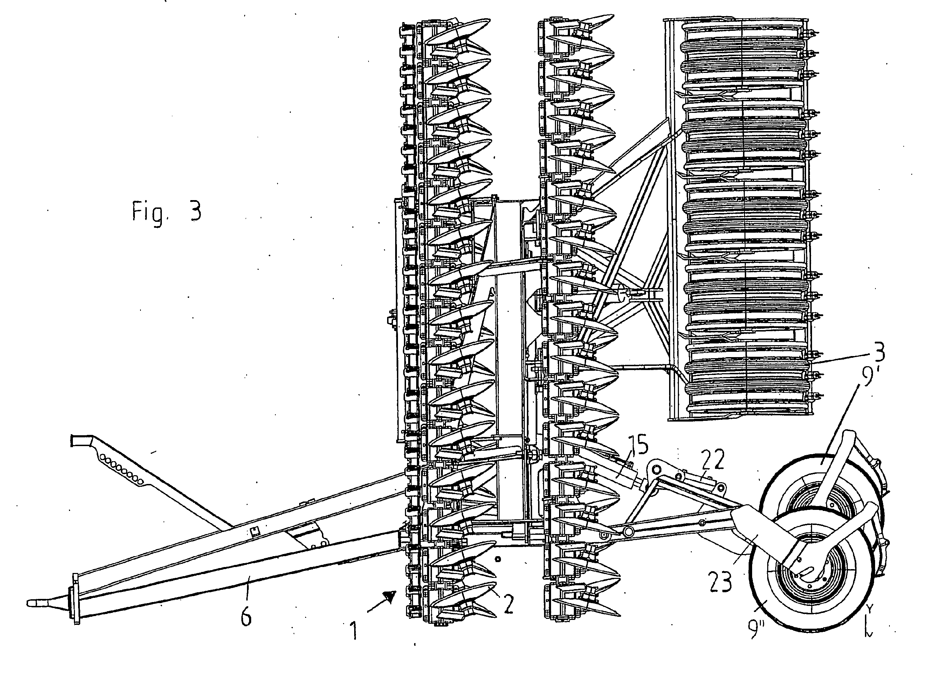

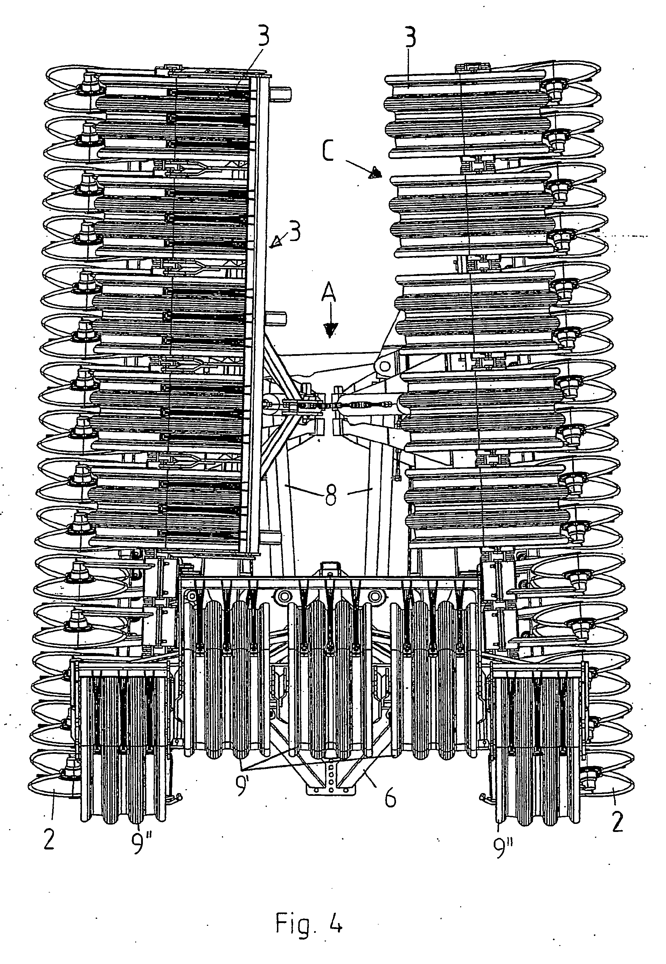

Die landwirtschaftliche Bodenbearbeitungsmaschine besteht aus der Kurzscheibenegge 1 und der hinter den Scheiben 2 der Kurzscheibenegge 1 angeordneten Walze 3. Insgesamt besteht die Bodenbearbeitungsmaschine aus drei Teilsektionen, nämlich der Mittelsektion A und den beiden Seitensektionen B und C. Die Seitensektionen B und C sind über Schwenkgelenke 4 an der Mittelsektion A angelenkt. An den Mittelrahmen 5 der Mittelsektionen A ist die Zugdeichsel 6 mit dem Aufbauturm 7 befestigt. Zwischen dem Rahmen 5 der Mittelsektion A und der jeweiligen Seitensektion B, C der Kurzscheibenegge 1 ist jeweils ein Hydraulikzylinder 8 angeordnet. Mittels dieser Hydraulikzylinder 8 kann das Bodenbearbeitungsgerät aus der Fig. 1 dargestellten Arbeitsposition in die in den Fig. 2-4 dargestellte Transportstellung eingeschwenkt werden.

Die Walze 3 besteht aus mehreren nebeneinander angeordneten Reifen- bzw. Reifensätzen 9, die auf Felgen 10 angeordnet sind und drehbar an Rahmen 11 und 12 angeordnet sind, die über Tragarme 13 und Schwenkgelenke 14 an dem Rahmen 5 und 5' der Kurzscheibenegge 1 angelenkt sind. Hierbei ist der Rahmen 12 der Walze der rechten Seitensektion C nicht dargestellt. Mittels der zwischen den Rahmen 11 und 12 der Walze 3 und dem Rahmen 5, 5' der Kurzscheibenegge 1 angeordneten doppelt wirkenden Hydraulikzylinder 15 lässt sich die Position der Walze 3 zu den als Scheiben 2 ausgebildeten Arbeitswerkzeugen der Kurzscheibenegge 1 einstellen, so dass die Arbeitstiefe der Scheiben 2 im Boden eingestellt werden kann.

Die mittlere Walze 3 bildet das Fahrwerk der Bodenbearbeitungsmaschine in Transportstellung zum Transport der Maschine, wie die Fig. 2-4 zeigen.

Die mittlere Walze 3 weist den aus Hauptrahmen 11' und einen Zwischenrahmen 11" bestehenden Rahmen 11 auf. Der Zwischenrahmen 11 " weist den quer zur Fahrtrichtung 16 verlaufenden Schwenkbalken 17 auf, der mittels der Gelenke 18 deren Schwenkachse 19 quer zur Fahrtrichtung 16 und horizontal verläuft, an dem Hauptrahmen 11' schwenkbar angeordnet ist. An diesem Schwenkbalken 17 sind nach hinten unten ragende Schwenkarme 20 angeordnet, an denen die mittleren Reifensätze 9' der mittleren Walze 3 drehbar gelagert sind. Der Schwenkbalken 17 bildet zusammen mit den Schwenkarmen 20 den als Schwenkrahmen ausgebildeten Zwischenrahmen 11 ". An dem Schwenkbalken 17 ist ein Schwenkarm 21 angeordnet. Zwischen dem Schwenkarm 21 und den Hauptrahmen 11' ist ein doppelt wirkender Hydraulikzylinder 22 angeordnet, mittels welchem der Schwenkrahmen 11" um die Gelenkachse 19 verschwenkbar und die mittleren Reifensätze 9'aus der in Fig. 1 dargestellten Arbeits- bzw. Walzposition in die in Fig. 2 dargestellte Transportstellung nach oben gegenüber den seitlichen Reifensätzen 9" des mittleren Rahmens 11' zu verschwenken. Die seitlichen Reifensätze 9" sind über Schwenkarme 23, die an dem Querträger des Hauptrahmens 11 " angeordnet sind, drehbar gelagert.

Wie vor erwähnt, sind die mittleren Reifensätze 9' der mittleren Walze 3 mittels des als doppelt wirkender Hydraulikzylinder 22 ausgebildeten motorischen Verstelleinrichtung aus der unteren Walzstellung in eine obere Fahrstellung aushebbar und in die untere Walzstellung wieder absenkbar, somit sind die mittleren Reifensätze 9' gegenüber den seitlichen Fahrwerksreifensätzen 9" höhenbewegbar angeordnet. In der Fahrstellung, wenn die mittleren Reifensätze 9' ausgehoben sind, stützt sich die Bodenbearbeitungsmaschine auf die beiden seitlichen Fahrwerksreifensätze 9" ab. Diese bilden das Fahrwerk der Maschine.

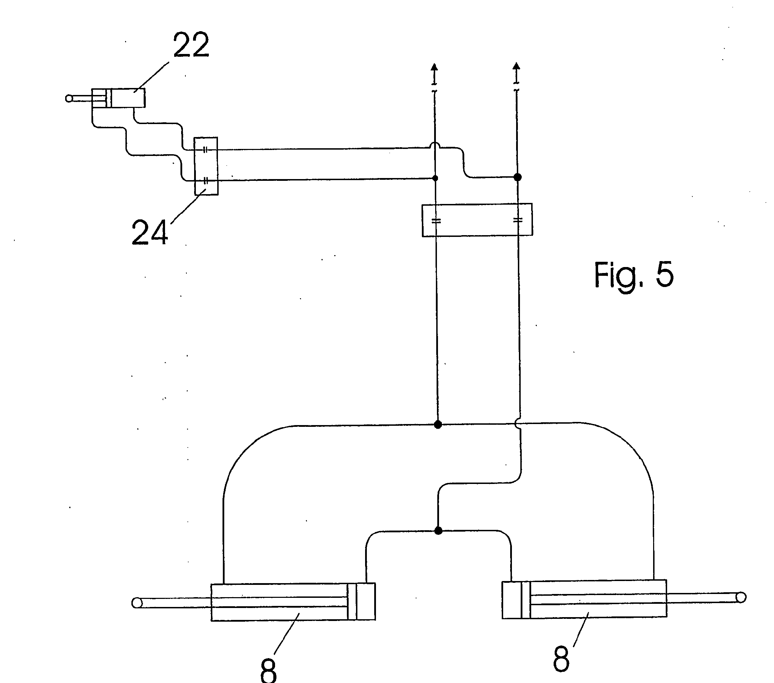

Wie bereits vor erwähnt, sind neben den seitlichen Fahrwerksreifensätzen 9" seitlich außen in mehreren Reihen angeordnete Seitenreifensätze, die die seitlichen Bodenwalzen 3, bilden angeordnet. Über die Gelenke 4 der Kurzscheibenegge 1 sind diese Walzen 3 mit ihren Seitenrahmen 12 durch die als Hydraulikzylinder 8 ausgebildeten motorischen Verstellelemente einzuklappen und wieder auszuklappen. Dem Hauptrahmen Sektion A bzw. Mittelrahmen den Rahmen der Sektionen B und C der Bodenbearbeitungsmaschine sind mittels der Schwenkgelenke 14 die Bodenwalzen 3 angeordnet. Der den mittleren Reifensätze 9' der mittleren Walze 3 zugeordnete Hydraulikzylinder 22 zum Anheben der Reifensätze 9' ist in Parallelschaltung zu den Hydraulikzylindern 8, die die Maschine Ein- und Ausklappen, angeordnet, wie der Hydraulikschaltplan gemäß Fig. 5 zeigt.

Um in Transportstellung zu verhindern, dass die Seitenteile B und C der Bodenbearbeitungsmaschine aus der nach oben eingeklappten Stellung nach unten fallen können und der mittlere Reifensatz 9' der mittleren Walzen 3 nach unten fällt, sind den Hydraulikzylindern 8 bzw. den zu dem Hydraulikzylinder 22 führenden Leitungen Sperrblöcke 24 angeordnet.

## Patentansprüche

1. Fahrwerk für eine landwirtschaftliche Bodenbearbeitungsmaschine mit mehreren in Reihe angeordneten Reifensätzen, die einen Reifenpacker nach Art einer unterteilten Walze bilden, wobei zumindest ein mittlerer, zwischen zwei seitlichen Fahrwerksreifensätzen angeordneter Reifensatz relativ zu den Fahrwerksreifensätzen höhenbewegbar angeordnet ist,
wobei dem (den) mittleren Reifensa(e)tz(en) (9') zumindest eine motorische Verstelleinrichtung (22) zugeordnet ist, mittels welcher der (die) Reifensa(e)tz(en) aus der unteren Walzstellung in eine obere Fahrstellung aushebbar und in die untere Walzstellung absenkbar ist (sind);
wobei jeweils seitlich außen neben den Fahrwerksreifensätzen (9") mehrere in Reihe angeordnete Seitenreifensätze (9) angeordnet sind, wobei die Seitenreifensätze (9) an Seitenrahmen (12) drehbar angeordnet sind, wobei die Seitenrahmen (12) an dem Hauptrahmen (A, B,C) mittels Schwenkgelenken (14) angeordnet sind, und wobei zwischen dem Hauptrahmen (A, B,C) und den Seitenrahmen (12) motorische Verstellelemente (15) angeordnet sind;
**dadurch gekennzeichnet, dass**
die motorische Verstelleinrichtung (22) als zumindest ein doppelwirkender Hydraulikzylinder ausgebildet ist der
in Parallelschaltung zu Hydraulikzylindern (8), die den Seitenrahmen (B, C) zum Einklappen zugeordnet sind, angeordnet ist.

2. Fahrwerk nach Anspruch 1, **dadurch gekennzeichnet, dass** die Reifensätze (9,9', 9") an einem Hauptrahmen (11') drehbar angeordnet sind, dass der (die) mittleren Reifensa (e)tz(en) an einem Zwischenrahmen (11 ") angeordnet sind, dass der Zwischenrahmen (11 ") mittels Schwenkarmen an dem Hauptrahmen (11') mit Schwenkgelenken (18) angeordnet ist, und dass die motorische Verstelleinrichtung (22) zwischen dem Zwischenrahmen (11 ") und dem Hauptrahmen (11') angeordnet ist.

3. Fahrwerk nach Anspruch 1, **dadurch gekennzeichnet, dass** in den zu den Hydraulikzylindem (22) der mittleren Reifensätze (9') führenden Hydraulikleitungen ein hydraulischer Sperrblock (24) angeordnet ist.

## Claims

1. Chassis for an agricultural soil cultivation machine with a plurality of tyre sets which are arranged in a row and form a tyre packer in the manner of a divided roller, wherein at least one central tyre set arranged between two lateral chassis tyre sets is arranged in a vertically moveable manner relative to the chassis tyre sets, wherein the central tyre set(s) (9') is (are) assigned at least one motorized adjustment device (22) by means of which the tyre set(s) is (are) raisable from the lower rolling position into an upper driving position and lowerable into the lower rolling position;
wherein a plurality of side tyre sets (9) arranged in a row are arranged in each case laterally on the outside next to the chassis tyre sets (9"), wherein the side tyre sets (9) are arranged rotatably on side frames (12), wherein the side frames (12) are arranged on the main frame (A, B, C) by means of pivoting joints (14), and wherein motorized adjustment elements (15) are arranged between the main frame (A, B, C) and the side frames (12),
**characterized in that**
the motorized adjustment device (22) is in the form of at least one double-action hydraulic cylinder which is arranged in a parallel connection to hydraulic cylinders (8) which are assigned to the side frames (B, C) for folding-in purposes.

2. Chassis according to Claim 1, **characterized in that** the tyre sets (9, 9', 9") are arranged rotatably on a main frame (11'), **in that** the central tyre set(s) is (are) arranged on an intermediate frame (11"), **in that** the intermediate frame (11") is arranged by means of pivoting arms on the main frame (11') with pivoting joints (18), and **in that** the motorized adjustment device (22) is arranged between the intermediate frame (11") and the main frame (11').

3. Chassis according to Claim 1, **characterized in that** a hydraulic shut-off block (24) is arranged in the hydraulic lines leading to the hydraulic cylinders (22) of the central tyre sets (9').

## Revendications

1. Dispositif de roulement pour une machine agricole servant à la préparation du sol, avec plusieurs jeux de pneus disposés en ligne, qui forment un ensemble de pneus à la manière d'un rouleau divisé, dans laquelle au moins un jeu de pneus central, disposé entre deux jeux de pneus latéraux du dispositif de roulement, est disposé de façon réglable en hauteur par rapport aux jeux de pneus du dispositif de roulement,
dans laquel au moins un dispositif de réglage motorisé (22) est associé au/aux jeu/jeux de pneus central/centraux (9'), au moyen duquel le/les jeu/jeux de pneus peut/peuvent être relevé(s) de la position de roulement inférieure à une position de transport supérieure et abaissé(s) dans la position de roulement inférieure,
dans lequel plusieurs jeux de pneus latéraux (9) disposés en ligne sont respectivement disposés latéralement à l'extérieur à côté des jeux de pneus (9") du dispositif de roulement, dans laquelle les jeux de pneus latéraux (9) sont disposés de façon rotative sur des châssis latéraux (12), dans laquelle les châssis latéraux (12) sont disposés sur le châssis principal (A, B, C) au moyen d'articulations pivotantes (14), et dans laquelle des éléments de réglage motorisés (15) sont disposés entre le châssis principal (A, B, C) et les châssis latéraux (12),
**caractérisé en ce que**
le dispositif de réglage motorisé (22) est constitué par au moins un vérin hydraulique à double action, qui est disposé en montage parallèle à des vérins hydrauliques (8), qui sont associés aux châssis latéraux (B, C) pour le rabattement.

2. Dispositif de roulement selon la revendication 1, **caractérisé en ce que** les jeux de pneus (9, 9', 9") sont disposés de façon rotative sur un châssis principal (11'), **en ce que** le/les jeu/jeux de pneus latéral/latéraux sont disposés sur un châssis intermédiaire (11"), **en ce que** le châssis intermédiaire (11") est disposé au moyen de bras pivotants sur le châssis principal (11') avec des articulations pivotantes (18), et **en ce que** le dispositif de réglage motorisé (22) est disposé entre le châssis intermédiaire (11") et le châssis principal (11').

3. Dispositif de roulement selon la revendication 1, **caractérisé en ce qu'**un bloc d'arrêt hydraulique (24) est disposé dans les conduites hydrauliques menant aux vérins hydrauliques (22) des jeux de pneus centraux (9').
